# EUROPEAN PATENT SPECIFICATION

(11) **EP 3 653 050 B1**
(45) Date of publication and mention of the grant of the patent: **15.05.2024**
(21) Application number: 19206378.2
(22) Date of filing: 30.10.2019
(51) Int. Cl.: A01K 97/22, A47C 7/00, A47C 4/00

(54) **A LOCKING MECHANISM**
SPERRMECHANISMUS
MÉCANISME DE VERROUILLAGE

(30) Priority: 16.11.2018 GB 201818762
(43) Date of publication of application: 20.05.2020
(73) Proprietor: Fox International Group Limited, Warley Brentwood Essex CM14 5EG (GB)
(72) Inventor: Taylor, Adam, Loughton, Essex IG10 2QR (GB)
(74) Representative: Hanson, William Bennett

(56) References cited:
- EP-A1- 1 905 299
- EP-A1- 2 957 172
- CN-A- 108 528 292

## Description

The present invention relates to a locking mechanism, especially but not exclusively a footplate locking mechanism for an angler's seat.

EP 1905299 A1 discloses a rectangular rigid frame equipped with four support legs and defining a foot rest. A rectangular case carries a creel-seat and is slidably mounted on the frame. The case is equipped with two support legs at its rear part and free from the support legs at its front part. A blocking unit maintains the case in a folded position above the frame or in a deployed position at the rear of the frame according to the need of a fisherman. The blocking unit is formed by stop forming bars mounted on the frame.

CN 108528292 discloses a headrest height adjusting device of an automotive child seat. The headrest height adjusting device of the automotive child seat comprises a seat back and a headrest arranged on the upper portion of the seat back, wherein an assembling groove is formed in the seat back; a headrest connecting plate which is inserted in the assembling groove and can vertically move relative to the seat back are arranged on the lower side of the headrest; a first connecting portion is arranged on the headrest connecting plate; a plurality of second connecting portions which can be connected with the first connecting portion in a matched manner and are fixed in the assembling groove are arranged in the assembling groove of the seat back from top to bottom; and a headrest height adjusting mechanism which is used for controlling the first connecting portion and enabling the first connecting portion to be connected with the second connecting portions in a matched manner or to be separated from the second connecting portion is arranged on the headrest connecting plate. The headrest connecting plate moves vertically to adjust the height of the headrest, the structure is simple, the first connecting portion is controlled by the headrest height adjusting mechanism, thus, the headrest connecting plate is fixed on the seat back or vertically moves relative to the seat back, and the user can adjust the height of the headrest according to use demands.

One construction with a mechanism as described in the opening paragraph of the present specification which construction has been provided hitherto comprises a main seat-supporting frame having a footplate which can be slid out from and retracted back into the frame. The locking mechanism releasably retains the footplate selectively in its extended or retracted position. The locking mechanism is located at the side of the frame, as a result of which one hand of a user is needed to operate the locking mechanism whilst the user's other hand slides the footplate into or out of the frame. This operation can be cumbersome especially for an angler trying to cope with uneven ground.

The present invention seeks to provide a remedy.

Accordingly the present invention is directed to a locking mechanism comprising a fixed component which is secured to a support part when the mechanism is fitted for use, and a slide component which when the mechanism is fitted for use is secured to a slidable part which can be extended from and retracted back into such a support part, the slide component having an operable part which when the mechanism is fitted for use is at an intended front portion of such a slidable part which the user holds to extend and retract the slidable part, there being interengaging portions of the fixed component and the slide component which interengage to hold such a slidable part in position relative to such a support part when the mechanism is fitted for use, and there being at least one moveable member of one of the said fixed and slide components moveable directly or indirectly by means of the said operable part to disengage the said interengaging portions thereby to enable such a slidable part to be extended from or retracted into such a support part when the mechanism is in use, in which the said at least one moveable member is a member of the said fixed component.

This provides the advantage that a user can both disengage the interengaging portions and slide such a slidable part out from or back into such a support part at the same time with one hand. Also, such a construction may reduce the amount of material required for the mechanism to be operable. The said operable part may be sprung-loaded towards a condition in which it will not cause the interengaging portions to disengage when the mechanism is in use.

This provides the advantage that the user may operate the operable part into a condition in which it does cause the interengaging portions to disengage by a squeezing action against the spring-loading.

The said at least one moveable member may be sprung loaded towards an engagement positon.

As a result the locking mechanism will tend to lock such a slidable part relative to such a support part in the absence of any operation of the said operable part.

The said slide component may be provided with at least one aperture located to receive the said moveable member with a given position of such a slidable part relative to such a moveable part, to lock those two parts in position relative to one another.

The said slide component may have a cam portion connected to the operable part to be moved thereby into and out of a position in which it will cause the interengaging portions to disengage, or to inhibit engagement therebetween.

This provides a simple and therefor inexpensive way of making the locking mechanism effective.

The said fixed component may have a moveable cam portion fixed relative to the said moveable member, the moveable cam portion being moved by the cam portion of the said slide component so as to move the said moveable member out of engagement with the interengaging portion of the slide component, or so as to inhibit engagement of the said moveable member with the interengaging portion of the slide component, when the said operable part is operated.

The slide component may be elongate with more than one such aperture spaced apart along its length, the cam portion of the slide component being provided with respective cams for the apertures.

This enables such a slidable part to be locked in more than one position relative to such a support part.

There may be a pair of moveable members each being as the said moveable member, receivable in one or more pairs of apertures each being as the said at least one aperture, each pair being spaced apart across the direction of movement of such a slideable part relative to such a support part when the mechanism is fitted for use.

This improves the stability of the mechanism.

The present invention extends to such a support part having such a slidable part which can be extended from and retracted into the support part, these two parts being fitted with a locking mechanism in accordance with the present invention.

The support part may be adapted to support an angler's tackle box as a seat, and the slidable part may constitute a footplate.

The footplate may be provided with a cover to protect the locking mechanism from the ingress of dirt and fish bait.

An example of a locking mechanism and an angler's seat support each embodying the present invention will now be described in greater detail with reference to the accompanying drawings, in which:
Figure 1 shows a perspective view from above, to the front and to one side, of a locking mechanism fitted to an angler's seat support with a footplate thereof in and extended position, embodying the present invention;
Figure 2 shows on a larger scale an underneath view of the locking mechanism and the angler's seat support shown in Figure 1;
Figure 3 shows a cross-sectional view of the locking mechanism and the angler's seat support shown in Figure 1, the plane of the cross-section being indicated by the line III-III in Figure 1;
Figure 4 shows a cross-sectional view of the locking mechanism and the angler's seat support shown in Figure 1, the plane of the cross-section being indicated by the line IV-IV in Figure 1;
Figure 5 shows a perspective view corresponding to that shown in Figure 1,with a cover fitted over the footplate;
Figure 6 shows on a larger scale a perspective view from underneath, from the front and from the other side, of a slide component of the locking mechanism and a footplate part of the angler's seat support shown in Figure 1, with a cover fitted over the footplate;
Figure 7 shows on a larger scale a perspective view from above, from the front and from the said one side of a fixed component of the locking mechanism and a main support part of the angler's seat support shown in Figure 1;
Figure 8 shows on a larger scale still a perspective view from underneath, from the front and to the said one side of a slide part of the locking mechanism shown in Figure 1;
Figure 9 shows on a larger scale still a perspective view from above, from the front, and to the said one side of a fixed component of the locking mechanism shown in Figure 1;
Figure 10 shows on a very much larger scale parts of what is shown in the cross-section of Figure 4; and
Figure 11 shows on a very much larger scale parts of what is shown in the cross-section of Figure 3.

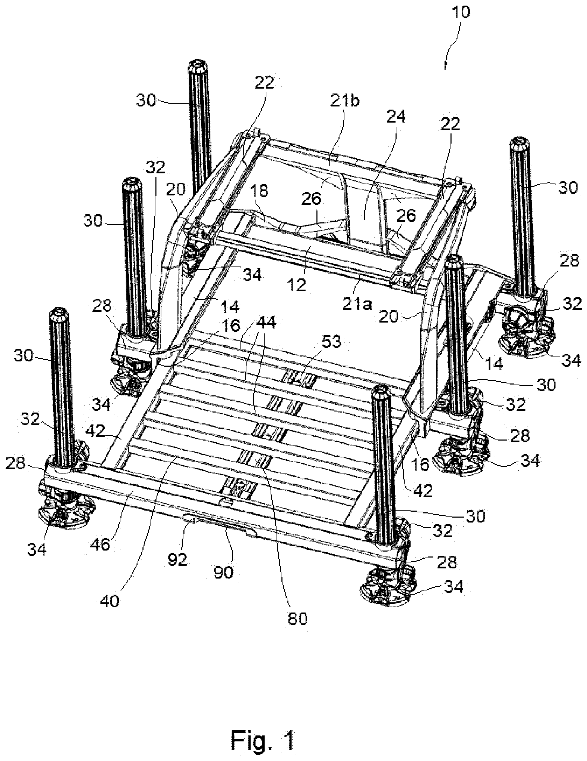

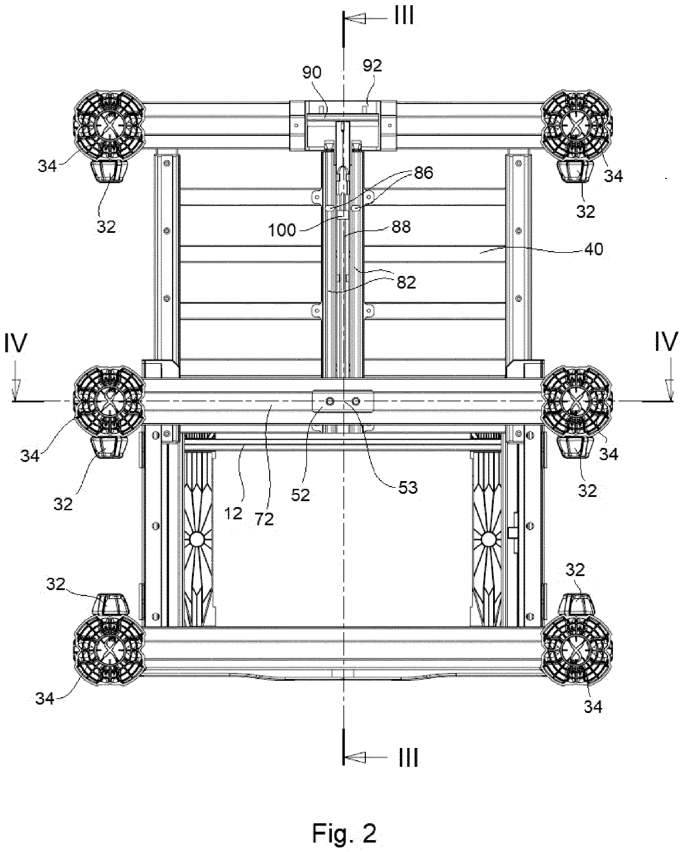

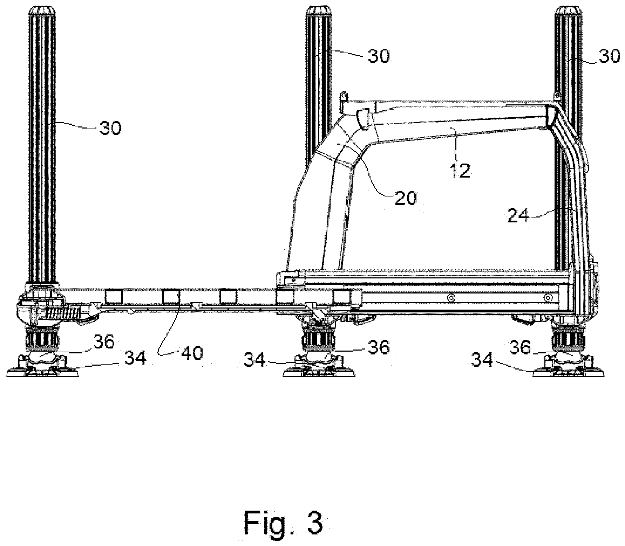

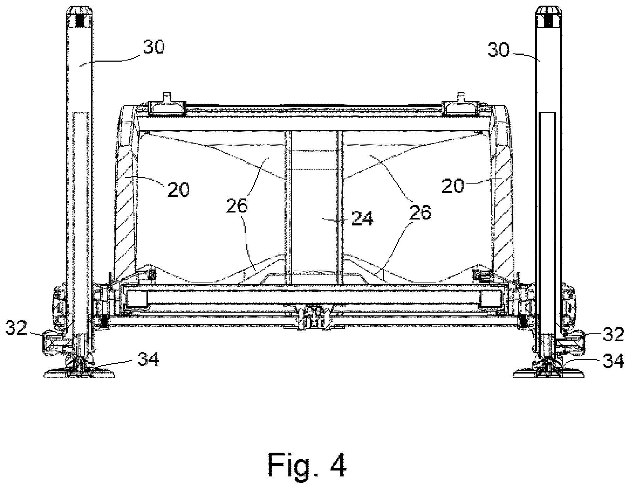

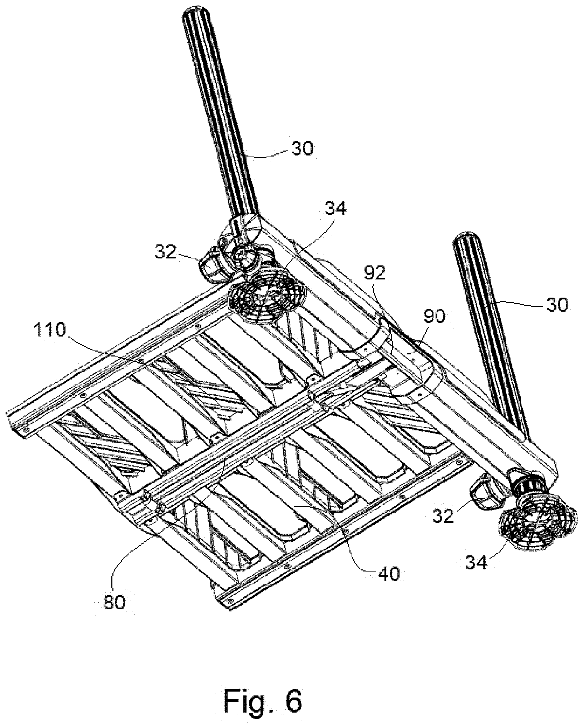

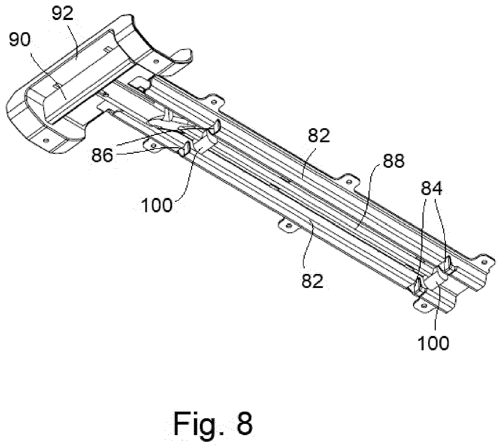

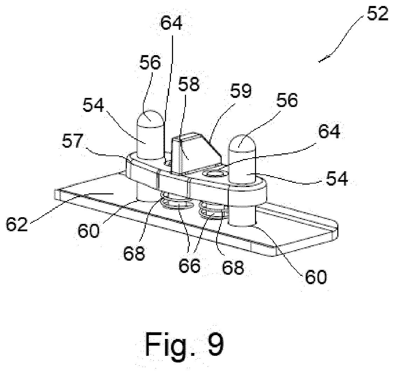

The angler's seat support 10 shown in Figures 1 to 11 comprises an aluminium seat support frame 12 constituting a support part. The frame 12 itself has two mutually parallel elongate base channel sections 14 having respective inwardly facing channels 16. These are fixed together at their respective rear ends by a transverse rear section 18. Two curved arm sections 20 extend upwardly from the respective front ends of the base sections 14 and then rearwardly, horizontally and slightly towards one another. Mutually parallel tubular sections 21a and 21b extend transversely and create a structural unit with the arms 20 to which they are welded, one, 21a, across the front ends of the horizontal portions of the arm sections 20, and the other, 21b, across the rear ends thereof. The rear tubular section, 21b, is further supported by a strut 24 extending upwardly from the middle of the transverse section 18 to which it is welded to the middle of the rear section 21b to which it is also welded. Slanting decorative covers 26 are provided at opposite ends of the strut 24, extending between the strut 24 and the frame part 22 at the upper end of the strut 24, and between the rear transverse section 18 and the strut 24 at the lower end thereof. The width of the strut 24 reinforces the frame 12 against a parallelogram collapse.

Plastics material connectors 22 extend from respective ends of the tubular section 21a to respective ends of the tubular section 21b, and are adapted to support an angler's box (not shown) itself adapted to act as a seat for an angler as well as to contain fishing equipment.

Clamps 28 are fixed to and extend outwardly from the front and rear ends of the two base channel sections 14. Each clamp 28 holds a generally upright leg 30 by a clamp screw 32 in a releasable fashion. Thus the legs are shown in a fully retracted position, but the clamp screw 32 can be loosened to enable the leg to be moved downwardly relative to the support frame 12 to any selected extent, whereafter the clamp screw 32 can be tightened to hold the leg in that selected degree of extension. In this way uneven ground can be accommodated, so that the legs support the base channel sections 14 in a horizontal condition even on uneven ground.

Respective generally planar generally circular feet 34 are attached to the lower ends of the legs 30 by way of ball-and-socket joints 36 so that the feet can swivel relative to the leg 30 to accommodate any slope in the ground at the base of the leg 30. The feet 34 are especially adapted to resist sinking of the leg 30 into the ground, which is a hazard often encountered especially if the ground is soft.

A generally rectangular footplate 40 having two parallel horizontal side sections 42 and a multiplicity of transverse sections 44 connecting the side sections 40 together has it side sections 42 received slidably within the channels 16 of the base sections 14, so that the footplate 40 as a whole can be extended out from and retracted back into the seat support frame 12. A front transverse section 46 of the footplate 40 extends outwardly beyond the side sections 42 to provide two further clamps 28 with clamp screws 32 releasably securing legs 30 with feet 34 in the same manner and for the same purpose as the clamps 28 and legs 30 attached to the main support 12.

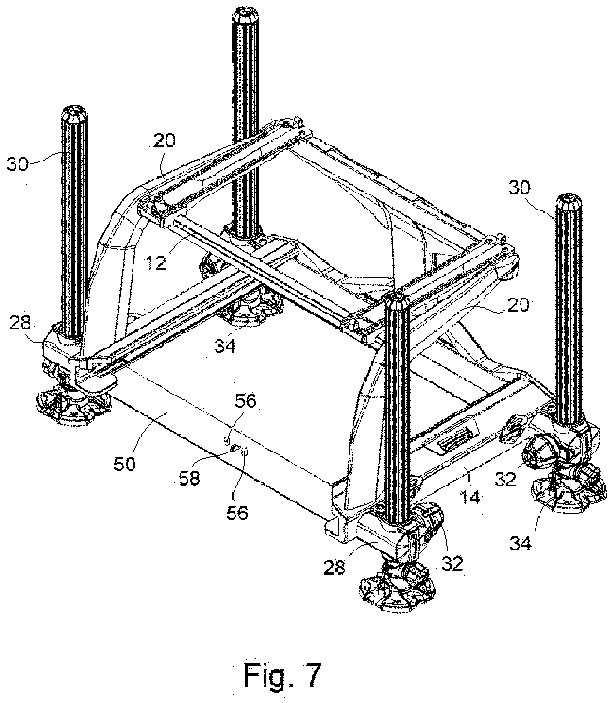

As shown more clearly in Figures 7 to 10, a front transverse section 50 of the seat support frame 12 has a fixed component 52 of a locking mechanism 53 attached to its underside, with moveable members in the form of two pins 54 spaced apart from one another transversely in relation to the direction of movement of the footplate 40 relative to the seat support 12, with rounded upper ends 56 of the pins 54 protruding upwardly through the section 50. The pins 54 are rigidly fixed to a transversely extending flange 57. A cam part 58 extends upwardly from the centre of the flange 57, midway between the pins 54. The cam part 58 has a rearwardly facing edge 59 which slants at an angle of 45° relative to the horizontal. Through-holes 60 in a support plate 62 of the component 52 receive lower ends of the pins 54, and through-holes 64 through the flange 57 on opposite sides of the cam part 58 receive upper ends of guide pegs 66 which are fixed to and extend upwardly from the support plate 62. Helical compression springs 68 are located between and urge apart the support plate 62 and the flange 57.

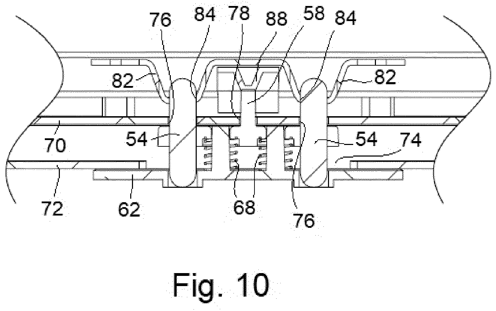

As can be seen readily from Figure 10, the section 50 has an upper wall 70 and a lower wall 72. The upper side of the support plate 62 of the fixed component 52 is secured to the lower surface of the lower wall 72 where there is an aperture 74 upwardly through which extend the parts of the component 52 which are supported by the plate 62. The upper wall 70 is provided with two through-holes 76 through which the pins 54 extend upwardly, and a slot 78 through which the cam part 58 extends upwardly. The flange 57 is urged upwardly against the lower side of the upper wall 70 by the compression springs 68.

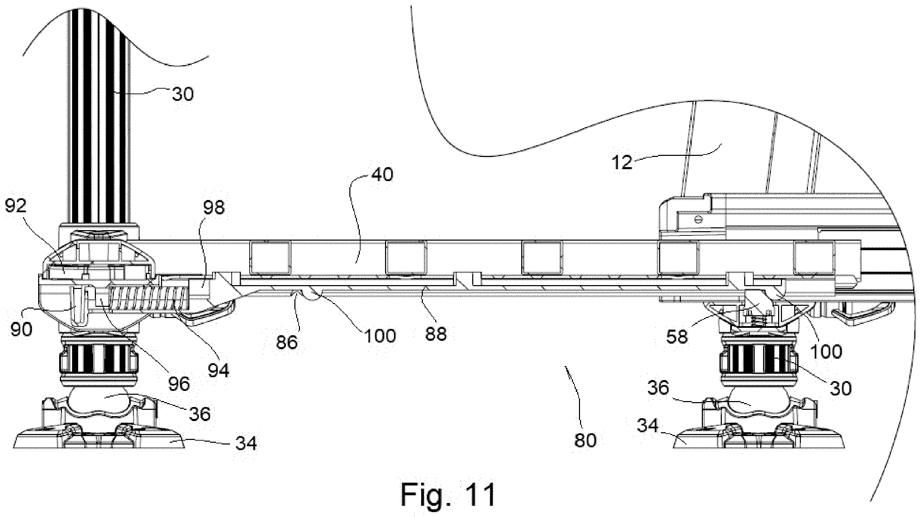

Shown more clearly in Figures 10 and 11 is an elongate slide component 80 of the locking mechanism 53, in the form of a runner type profile, attached to the underside of the footplate 40. It extends centrally from the front to the back of the footplate 40 and has two elongate ridges 82 in which a first pair of apertures 84 is formed towards the rear ends of the ridges 82, the apertures of the pair being formed in respective ones of the ridges 82 and being formed in registration with one another and spaced apart transversely of the component 80. A further such pair of apertures 86 is formed towards the forward ends of the ridges 82.

A release rod 88 is retained within the elongate slide component 80 in such a fashion as to be moveable between a rearward non-release position (as shown in Figure 11 for example) and a forward release position. A finger grip 90 in the form of a T-bar profile on the underside of a handle 92 of the footplate 40 at the front thereof is fixed to the release rod 88. A compression spring 94 is located between and urges apart an abutment 96 which is fixed relative to the ridges 82 and an abutment 98 which is fixed relative to the release rod 88, so that the compression spring 94 urges the release rod 88 into its non-release position. Respective rounded cam parts 100 associated with the two pairs of apertures 84 and 86 are provided on the underside of the cam rod 88, protruding downwardly therefrom and located thereon such that they are offset rearwardly of the apertures when the release rod 88 is in its rearward non-release position.

The accompanying drawings show the seat support 10 with its footplate 40 locked in its extended position by the locking mechanism 53, the pins 54 of the fixed component 52 of the locking mechanism 53 being received in the rear apertures 84 of the ridges 82, so that the pins 54 and the ridges 82 constitute interengaging portions which hold the footplate 40 against sliding relative to the seat support frame 12.

When the user wishes to retract the footplate 40 into the seat support frame 12 for stowage or to move the seat support 10 to a different location, the user places the palm of one hand against the handle 92 whilst inserting the fingers of the same hand behind the finger grip 90. With a squeezing action of the hand, the user now moves the release rod 88 against the restoring force of the compression spring 94 into its forward release position. As a result, the rearward cam part 100 engages the slanting edge 59 of the cam part 58 and urges it downwardly with further relative forward movement of the release rod 88. This pushes the flange 57 and with it the pins 54 downwardly, so that the pins are removed from the apertures 84 and the pins 54 no longer engage the ridges 82. The footplate 40 is now free to be pushed or retracted into the support frame 12 by the user pushing against the handle 92 with the one hand used to unlock the locking mechanism 53. Once such disengagement has occurred, the user releases the finger grip 90 so that it and the release rod 88 return to their rearward non-release positions. As a result, once the footplate 40 is fully retracted, the pins 54 which during the sliding action had been urged by the compression springs 68 against the ridges 82, now snap into the apertures 86 under the action of those compression springs 68 to lock the footplate 40 in the fully retracted position relative to the support frame 12.

A similar operation enables the user to extend the footplate 40. Thus the user squeezes the finger grip 90 towards the handle 92 to operate the release rod 88, pulls the footplate 40 out from the support frame 12, releasing the finger grip once the pins 54 are clear of the apertures 86, so that they will snap into the apertures 84 once the footplate 40 is in the fully extended position so that the locking mechanism 53 locks the footplate 40 in that position.

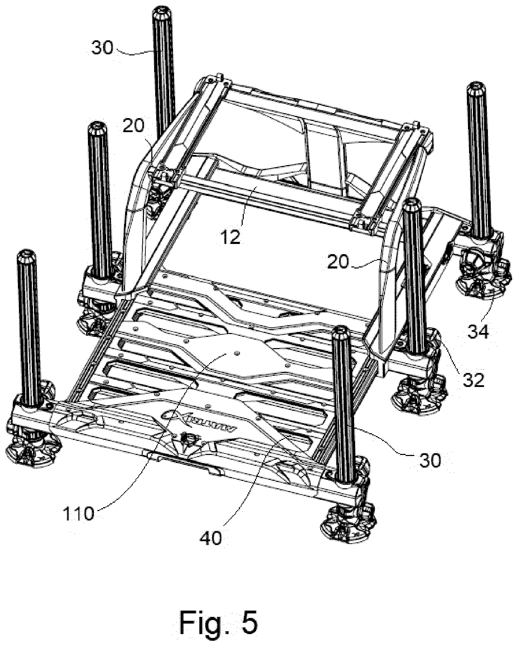

A cover plate 110 may be provided over the footrest 40 to protect the locking mechanism 53 from the ingress of dirt or angler bait when in use, as shown in Figure 5.

It will be appreciated the in the illustrated construction there only needs to be one fixed component 52 of the locking mechanism 53, reducing the number of parts required and the complexity thereof.

Numerous variations and modifications to the illustrated locking mechanism 53 and angler's seat support 10 may occur to the reader without taking the resulting construction outside the scope of the present invention. To give one example only, a one or more further pairs of apertures may be provided in the ridges 82 to enable the user to lock the footplate 40 in one or more intermediate positions relative to the support frame 12 between the fully extended and fully retracted positions.

The scope of protection of the current invention is defined by the appended claims.

## Claims

1. A locking mechanism comprising a fixed component (52) which is secured to a support part (12) when the mechanism is fitted for use, and a slide component (80) which when the mechanism is fitted for use is secured to a slidable part (40) which can be extended from and retracted back into such a support part (12), in which the slide component (80) has an operable part (90) which when the mechanism is fitted for use is at an intended front portion of such a slidable part (40) which the user holds to extend and retract the slidable part (40), there being interengaging portions (54 and 82) of the fixed component (52) and the slide component (80) which interengage to hold such a slidable part (40) in position relative to such a support part (12) when the mechanism is fitted for use, and there being at least one moveable member (54 or 88) of one of the said fixed and slide components (52 and 80) moveable directly or indirectly by means of the said operable part (90) to disengage the said interengaging portions (54 and 82) thereby to enable such a slidable part (40) to be extended from or retracted into such a support part (12) when the mechanism is in use, **characterised in that** the said at least one moveable member (54) is a member of the said fixed component (52).

2. A locking mechanism according to claim 1, **characterised in that** the said operable part (90) is sprung-loaded towards a condition in which it will not cause the interengaging portions (54 and 82) to disengage when the mechanism is in use.

3. A locking mechanism according to claim 1 or claim 2, **characterised in that** the said at least one moveable member (54) is sprung loaded towards an engagement positon.

4. A locking mechanism according to any preceding claim, **characterised in that** the said slide component (80) is provided with at least one aperture (84) located to receive the said moveable member (54) with a given position of such a slidable part (40) relative to such a moveable part (54), to lock those two parts in position relative to one another.

5. A locking mechanism according to any preceding claim, **characterised in that** the said slide component (80) has a cam portion (100) connected to the operable part (90) to be moved thereby into and out of a position in which it will cause the interengaging portions (54 and 82) to disengage, or to inhibit engagement therebetween.

6. A locking mechanism according to any preceding claim, **characterised in that** the said fixed component (52) has a moveable cam portion (58) fixed relative to the said moveable member (54), the moveable cam portion (58) being moved by the cam portion (100) of the said slide component (80) so as to move the said moveable member (54) out of engagement with the interengaging portion (82) of the slide component (80), or so as to inhibit engagement of the said moveable member (54) with the interengaging portion (82) of the slide component (80), when the said operable part (90) is operated.

7. A locking mechanism according to any preceding claim, **characterised in that** the slide component (80) is elongate with more than one such aperture (84) spaced apart along its length, the cam portion (100) of the slide component (80) being provided with respective cams (100) for the apertures (84).

8. A locking mechanism according to claim 4, **characterised in that** there is a pair of moveable members (54) each being as the said moveable member (54), receivable in one or more pairs of apertures (84, 86) each being as the said at least one aperture (84), each pair (84, 86) being spaced apart across the direction of movement of such a slideable part (40) relative to such a support part (12) when the mechanism is fitted for use.

9. A support part (12) having a slidable part (40) which can be extended from and retracted into the support part (12), these two parts (12 and 40) being fitted with a locking mechanism as claimed in any preceding claim.

10. A support part (12) according to claim 9, **characterised in that** the support part (12) is adapted to support an angler's tackle box as a seat, and the slidable part (40) constitutes a footplate.

11. A support part according to claim 10, **characterised in that** the footplate (40) is provided with a cover (110) to protect the locking mechanism from the ingress of dirt and fish bait.

## Patentansprüche

1. Sperrmechanismus mit einer festen Komponente (52), die an einem Trägerteil (12) befestigt ist, wenn der Mechanismus für den Gebrauch zusammengefügt ist, und einer Gleitkomponente (80), die, wenn der Mechanismus für den Gebrauch zusammengefügt ist, an einem verschiebbaren Teil (40) befestigt ist, das aus dem Trägerteil (12) ausgefahren und in dieses zurückgezogen werden kann, wobei die Gleitkomponente (80) ein betätigbares Teil (90) aufweist, das, wenn der Mechanismus für den Gebrauch zusammengefügt ist, an einem vorgesehenen vorderen Abschnitt des verschiebbaren Teils (40) angeordnet ist, den der Benutzer hält, um das verschiebbare Teil (40) auszufahren und zurückzuziehen, wobei ineinandergreifende Abschnitte (54 und 82) der festen Komponente (52) und der Gleitkomponente (80) vorgesehen sind, die ineinandergreifen, um das verschiebbare Teil (40) in einer Position relativ zu dem Trägerteil (12) zu halten, wenn der Mechanismus für den Gebrauch zusammengefügt ist, und wobei mindestens ein bewegliches Element (54 oder 88) der festen Komponente (52) oder der Gleitkomponente (80) vorgesehen ist, das direkt oder indirekt mittels des betätigbaren Teils (90) beweglich ist, um die ineinandergreifenden Abschnitte (54 und 82) zu lösen und dadurch zu ermöglichen, dass das verschiebbare Teil (40) aus dem Trägerteil (12) ausgefahren oder in dieses zurückgezogen werden kann, wenn der Mechanismus in Gebrauch ist, **dadurch gekennzeichnet, dass** das mindestens eine bewegliche Element (54) ein Element der festen Komponente (52) ist.

2. Sperrmechanismus nach Anspruch 1, **dadurch gekennzeichnet, dass** das betätigbare Teil (90) in einen Zustand federbelastet ist, in dem es nicht dazu führt, dass sich die ineinandergreifenden Abschnitte (54 und 82) lösen, wenn der Mechanismus in Gebrauch ist.

3. Sperrmechanismus nach Anspruch 1 oder Anspruch 2, **dadurch gekennzeichnet, dass** das mindestens eine bewegliche Element (54) in Richtung einer Eingriffsposition federbelastet ist.

4. Sperrmechanismus nach einem der vorstehenden Ansprüche, **dadurch gekennzeichnet, dass** die Gleitkomponente (80) mindestens eine Öffnung aufweist, die so angeordnet ist, dass sie das bewegliche Element (54) bei einer gegebenen Position des verschiebbaren Teils (40) relativ zu dem beweglichen Teil (54) aufnimmt, um diese beiden Teile in ihrer Position relativ zueinander zu verriegeln.

5. Sperrmechanismus nach einem der vorstehenden Ansprüche, **dadurch gekennzeichnet, dass** die Gleitkomponente (80) einen Nockenabschnitt (100) aufweist, der mit dem betätigbaren Teil (90) verbunden ist, um durch dieses in eine und aus einer Position bewegt zu werden, in der es bewirkt, dass sich die ineinandergreifenden Abschnitte (54 und 82) voneinander lösen, oder um einen Eingriff zwischen ihnen zu verhindern.

6. Sperrmechanismus nach einem der vorstehenden Ansprüche, **dadurch gekennzeichnet, dass** die feste Komponente (52) einen beweglichen Nockenabschnitt (58) aufweist, der relativ zu dem beweglichen Element (54) befestigt ist, wobei der bewegliche Nockenabschnitt (58) durch den Nockenabschnitt (100) der Gleitkomponente (80) bewegt wird, um das bewegliche Element (54) außer Eingriff mit dem Eingriffsabschnitt (82) der Gleitkomponente (80) zu bewegen oder um den Eingriff des beweglichen Elements (54) mit dem Eingriffsabschnitt (82) des Schiebeelement (80) zu verhindern, wenn das betätigbare Teil (90) betätigt wird.

7. Sperrmechanismus nach einem der vorstehenden Ansprüche, **dadurch gekennzeichnet, dass** die Gleitkomponente (80) länglich ist und mehr als eine Öffnung (84) aufweist, die entlang ihrer Länge beabstandet sind, wobei der Nockenabschnitt (100) der Gleitkomponente (80) entsprechende Nocken (100) für die Öffnungen (84) aufweist.

8. Sperrmechanismus nach Anspruch 4, **dadurch gekennzeichnet, dass** ein Paar beweglicher Elemente (54) vorgesehen ist, die jeweils als das bewegliche Element (54) ausgebildet sind und in einem oder mehreren Paaren von Öffnungen (84, 86) aufnehmbar sind, die jeweils als die mindestens eine Öffnung (84) ausgebildet sind, wobei jedes Paar (84, 86) in der Bewegungsrichtung des verschiebbaren Teil (40) relativ zu dem Trägerteil (12) beabstandet ist, wenn der Mechanismus für den Gebrauch zusammengefügt ist.

9. Trägerteil (12) mit einem verschiebbaren Teil (40), das aus dem Trägerteil (12) herausgezogen und in dieses zurückgezogen werden kann, wobei diese beiden Teile (12 und 40) mit einem Sperrmechanismus nach einem der vorstehenden Ansprüche zusammengefügt sind.

10. Trägerteil (12) nach Anspruch 9, **dadurch gekennzeichnet, dass** das Trägerteil (12) eingerichtet ist zum Tragen einer Anglerausrüstung als Sitz, und dass das verschiebbare Teil (40) eine Fußplatte bildet.

11. Trägerteil nach Anspruch 10, **dadurch gekennzeichnet, dass** die Fußplatte (40) eine Abdeckung (110) aufweist, um den Sperrmechanismus vor dem Eindringen von Schmutz und Fischködern zu schützen.

## Revendications

1. Un mécanisme de verrouillage comprenant un composant fixe (52) qui est fixé à une partie de support (12) lorsque le mécanisme est installé pour être utilisé, et un composant coulissant (80) qui lorsque le mécanisme est installé pour être utilisé est fixé à une partie coulissante (40) qui peut être étendue et rétractée dans une telle partie de support (12), dans lequel le composant coulissant (80) présente une partie actionnable (90) qui, lorsque le mécanisme est installé pour être utilisé se trouve sur une partie avant prévue à cette fin d'une telle partie coulissante (40) que l'utilisateur tient pour étendre et rétracter la partie coulissante (40), présentant des parties s'inter-engageant (54 et 82) du composant fixe (52) et du composant coulissant (80) qui s'inter-engagent pour maintenir une telle partie coulissante (40) en position par rapport à une telle partie de support (12) lorsque le mécanisme est installé pour être utilisé, et présentant au moins un élément mobile (54 ou 88) de l'un desdits composants fixes et coulissants (52 et 80) mobile directement ou indirectement au moyen de ladite partie actionnable (90) pour désengager lesdites parties s'inter-engageant (54 et 82), permettant ainsi à une telle partie coulissante (40) d'être étendue ou rétractée dans une telle partie de support (12) lorsque le mécanisme est utilisé **caractérisé en ce que** ledit au moins un élément mobile (54) est un élément dudit composant fixe (52).

2. Un mécanisme de verrouillage selon la revendication 1, **caractérisé en ce que** ladite partie actionnable (90) est chargée par ressort dans un état dans lequel elle n'entraînera pas le désengagement des parties s'inter-engageant (54 et 82) lorsque le mécanisme est utilisé.

3. Un mécanisme de verrouillage selon la revendication 1 ou la revendication 2, **caractérisé en ce que** ledit au moins un élément mobile (54) est chargé par ressort vers une position d'engagement.

4. Un mécanisme de verrouillage selon l'une quelconque des revendications précédentes, **caractérisé en ce que** ledit composant coulissant (80) est pourvu d'au moins une ouverture (84) située pour recevoir ledit élément mobile (54) avec une position donnée d'une telle partie coulissante (40) par rapport à une telle partie mobile (54), pour verrouiller ces deux parties en position l'une par rapport à l'autre.

5. Un mécanisme de verrouillage selon l'une quelconque des revendications précédentes, **caractérisé en ce que** ledit composant coulissant (80) présente une partie de came (100) reliée à la partie actionnable (90) pour être ainsi déplacée dans et hors d'une position dans laquelle elle provoquera le désengagement des parties s'inter-engageant (54 et 82), ou pour empêcher l'engagement entre elles.

6. Un mécanisme de verrouillage selon l'une quelconque des revendications précédentes, **caractérisé en ce que** ledit composant fixe (52) présente une partie de came mobile (58) fixée par rapport audit élément mobile (54), la partie de came mobile (58) étant déplacée par la partie de came (100) dudit composant coulissant (80) de manière à déplacer ledit élément mobile (54) hors de l'engagement avec la partie s'inter-engageant (82) du composant coulissant (80), ou de manière à empêcher l'engagement dudit élément mobile (54) avec la partie s'inter-engageant (82) du composant coulissant (80), lorsque ladite partie actionnable (90) est actionnée.

7. Un mécanisme de verrouillage selon l'une quelconque des revendications précédentes, **caractérisé en ce que** le composant coulissant (80) est allongé avec plus d'une telle ouverture (84) espacée sur sa longueur, la partie came (100) du composant coulissant (80) étant prévue avec des cames respectives (100) pour les ouvertures (84).

8. Un mécanisme de verrouillage selon la revendication 4, **caractérisé en ce qu'**il présente une paire d'éléments mobiles (54), chacun étant ledit élément mobile (54), pouvant être reçu dans une ou plusieurs paires d'ouvertures (84, 86), chacune étant comme ladite au moins une ouverture (84), chaque paire (84, 86) étant espacée dans la direction de mouvement d'une telle partie coulissante (40) par rapport à une telle partie de support (12) lorsque le mécanisme est installé pour être utilisé.

9. Une pièce de support (12) présentant une partie coulissante (40) qui peut être étendue et rétractée dans la partie de support (12), ces deux parties (12 et 40) étant équipées d'un mécanisme de verrouillage selon l'une quelconque des revendications précédentes.

10. Une pièce de support (12) selon la revendication 9, **caractérisée en ce que** la pièce de support (12) est adaptée pour supporter une boîte de pêche comme siège, et la partie coulissante (40) constitue un repose pieds.

11. Une pièce de support selon la revendication 10, **caractérisée en ce que** le repose pieds (40) est pourvu d'un couvercle (110) pour protéger le mécanisme de verrouillage d'entrée de saletés et des appâts pour poissons.
